Europäisches Patentamt

European Patent Office

Office européen des brevets

(11) Publication number: **0 205 886**
A2

# EUROPEAN PATENT APPLICATION

(21) Application number: 86106524.1

(22) Date of filing: 14.05.86

(51) Int. Cl.⁴: **B 23 C 5/10**

(30) Priority: 22.05.85 US 736947

(43) Date of publication of application: 30.12.86
Bulletin 86/52

(84) Designated Contracting States: AT BE CH DE FR GB IT LI LU NL SE

(71) Applicant: Lindsay, Harold William, Lindsay Enterprises, Inc. 2451 N.W. 30th, Portland Oregon 97210 (US)

(72) Inventor: Lindsay, Harold William, Lindsay Enterprises, Inc. 2451 N.W. 30th, Portland Oregon 97210 (US)

(74) Representative: Frankland, Nigel Howard et al, FORRESTER & BOEHMERT Widenmayerstrasse 4/I, D-8000 München 22 (DE)

(54) Improvements in or relating to an end milling cutter.

(57) An end milling cutter (10) has a cutter head (14) with a pair of opposed slots (22) extending longitudinally inwardly from the end face (16) and substantially radially from the lateral surface (24) of the cutter head (14) to a central longitudinal axis (18). Each slot (22) forms an insert-supporting shoulder (30) which extends from the longitudinal axis (18) to the lateral surface (24) of the head (14). A triangular cutting insert (26) is received in each slot (22) and is supported on one side by the shoulder (30). A pressed dimple (44) extending inwardly of the cutter head (14) from the end face (16), engages and supports a second side of each of the inserts (26) such that the cutting edges thereof are accurately positioned at a prescribed diameter.

ACTORUM AG

Improvements in or relating to an end milling cutter.

This invention relates to end milling cutters for machine tools and, more particularly, to end milling cutters utilizing replaceable cutting inserts.

End milling cutters have previously utilized replaceable cutting inserts which are retained between cooperating jaw elements formed in the cutter head. An end milling cutter of this general type is shown in Canadian Patent No. 944139. The accurate positioning of the cutting edges of the inserts, however, has posed a problem with cutters of this type.

It is an object of the present invention to provide an end milling cutter having a pair of cooperating jaw elements between which are positioned replaceable cutting inserts whose cutting edges are accurately disposed at a prescribed diameter.

According to the present invention there is provided an end milling cutter comprising a shank having a cutter head, the cutter head having a central longitudinal axis and an end face; a pair of opposed slots formed in the cutter head, each of the slots extending longitudinally inwardly away from the end face and generally radially from the central longitudinal axis to an external or lateral surface of the cutter head, the pair of slots separating a pair of cooperating jaw elements defined by the cutter head, each jaw element including a transversely extending shoulder located within a respective one of the slots and extending from the central longitudinal axis to the lateral surface of the cutter head; a cutting insert received in each of the slots, the insert having at least three sides, the shoulder in each slot engaging and supporting one side of the insert received in the slot, a pair of dimples, one on each of the jaw elements, each dimple engaging a second side of the insert received in the slot, and clamping means to retain the inserts within their respective slots.

Preferably the shoulders are inclined relative to the lateral surface of the cutter head and are each inclined in an opposite direction to the other.

Conveniently, the dimples are disposed on opposite sides of a diameter of the cutter head and extend inwardly of the cutter head from the end face thereof.

Advantageously, the inserts are triangular inserts.

The present invention further provides a method of making an end milling cutter, said method comprising the steps of cutting a pair of substantially radially extending first slots on opposite sides of a diameter of a cutter head, which is mounted on a shank, the first slots being of a width substantially equal to the thickness of a cutting insert; cutting a pair of second slots in the cutter head, the second slots extending the first slots longitudinally of the cutter head, the second slots extending radially inwardly from the lateral surface of the cutter head to the central longitudinal axis thereof, and being of a width less than the width of the first slots, such that each of the first slots form a shoulder; providing means to clamp cutting inserts in the slots, placing a cutting insert in each of the first slots, one side of each of the inserts engaging with and being supported by the respective shoulder of each slot; placing the cutter head and the inserts in a fixture, the fixture having a first cylindrical inner surface, the diameter of the first cylindrical inner surface being greater than the diameter of the cutter head and equal to a desired cutting diameter at which the cutting edges of the insert should be positioned; sliding the inserts radially outwardly along the shoulders until the cutting edges of the inserts contact the first cylindrical inner surface of the fixture; and pressing a dimple longitudinally inwardly of each jaw element from the end face of the cutter head until the dimple contacts a second side of each of the inserts, the dimples retaining the cutting edges of the inserts in position abutting the first cylindrical inner surface of the fixture, and clamping the cutting inserts in position with said clamping means.

Conveniently, the step of providing clamping means comprises drilling a radially extending hole through the jaw elements of the cutter head, the hole being substantially normal to the first and second slots; tapping part of the hole in one jaw element, introducing a clamping screw into the hole through the cutter jaw element; and said clamping step comprises tightening the clamping screw to draw the jaw elements together to retain the inserts in the first slots when the cutter head and the inserts are in the fixture.

Conveniently, said shank is a substantially cylindrical shank on the cutter head, the diameter of the shank being less than the diameter of the cutter head, the fixture having a cylindrical support hole coaxial with the first cylindrical surface, with the support hole having a diameter substantially equal to or slightly greater than the diameter of the shank, but less than the diameter of the first cylindrical inner surface, thus forming a shoulder in the fixture; the method comprising the step of placing the shank in the support hole to support the shank, the cutter head being supported by the shoulder of the fixture.

In order that the present invention may be more readily understood and so that further features thereof may be appreciated, the invention will now be described by way of example, with reference to the accompanying drawings, in which:

FIGURE 1 is an exploded perspective view of a cutter of the invention;

FIGURE 2 is a top plan view of the cutter of Figure 1, when mounted in a fixture;

FIGURE 3 is a reduced scale, partly sectional view on line 3-3 of Figure 2;

FIGURE 4 is a partly sectional view taken on line 4-4 of Figure 2, with portions of the cutter broken away;

FIGURE 5 is an enlarged, partly sectional view taken on the line 5-5 of Figure 4; and

FIGURE 6 is a partly sectional view similar to Figure 4 but of the cutter only and to an enlarged scale.

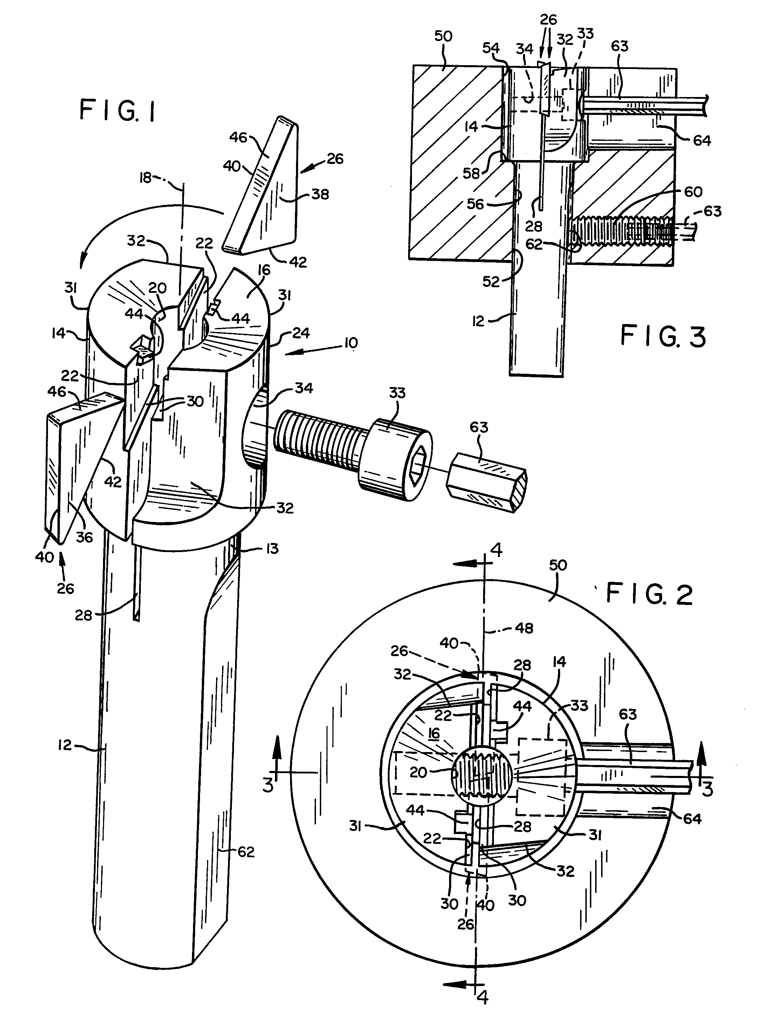

Referring to the drawings, and particularly to Figure 1, an end milling cutter 10 comprises a shank 12 of high-speed steel having at one end 13 a substantially cylindrical cutter head 14 with a conically dished end face 16 substantailly normal to the longitudinal axis 18 thereof. The diameter of the shank 12 is less than the diameter of the cutter head 14. A cylindrical bore 20 is drilled coaxially with the longitudinal axis 18 of the cutter head 14 and extends longitudinally inwardly from the end face 16 over the length of the head 14.

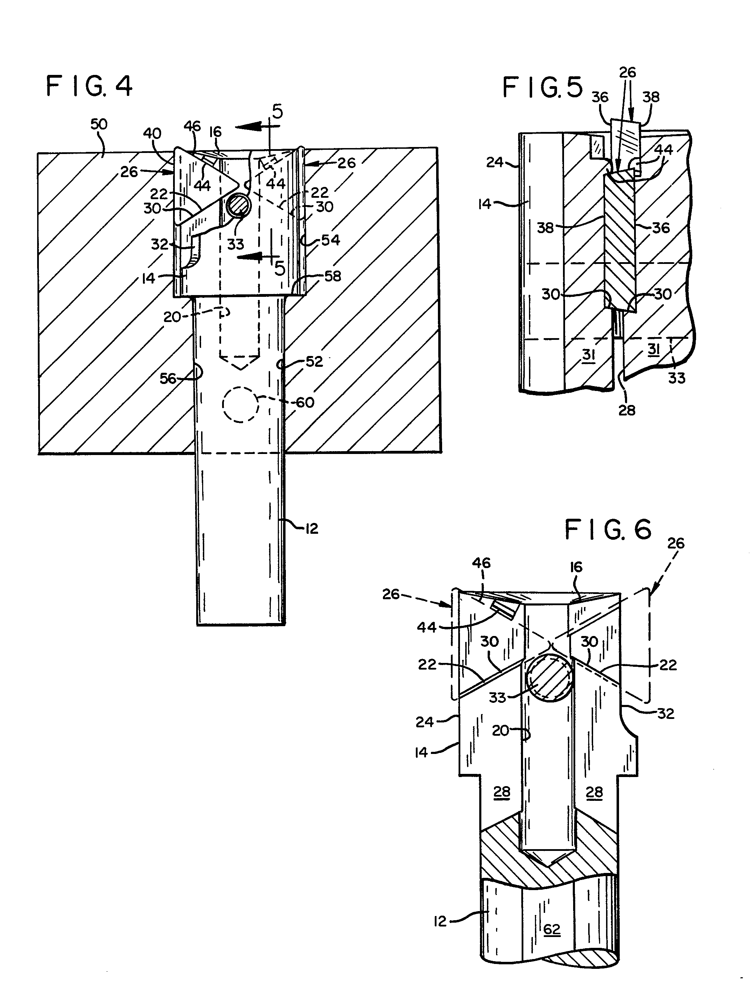

A pair of substantially radially extending negative rake, opposed slots 22 are cut in the end of the cutter head 14 adjacent the end face 16 on either side of a diameter 48 of the head 14 and at an angle of about sixty degrees with respect to the lateral surface 24 of the head 14. Each of the slots 22 is sloped oppositely to the other (see Figures 4 and 6). The slots 22 each have a region of a width substantially equal to the thickness of a cutting insert 26. The slots 22 extend longitudinally inwardly from the end face 16 and substantially radially from the lateral surface 24, extending to the bore 20 as shown (see Figure 1). Of course, although the slots 22 are shown with negative rake, they can also be at neutral or positive rake angles.

A second pair of slots 28 are cut in the head 14 at a lesser width than the slots 22. The slots 28 extend the slots 22 longitudinally of the cutter head 14 and also extend radially inwardly from the lateral surface 24 to the bore 20. As can be seen from Figure 1, the slots 22 form supporting shoulders 30 located on both sides of and above slots 28. Thus, the bore 20 and the slots 22 and 28 define a pair of cooperating jaw elements 31 in the cutter head 14. The lateral surface 24 of the head 14 is milled, on opposite sides, adjacent the slots 22 to form swarf clearance cut-outs 32 to allow for adequate swarf removal.

A socket head cap screw 33 is received in a drilled, tapped, counterbored and substantially radially extending hole 34 passing through the jaw elements 31 transversely of the longitudinal axis 18 of the cutter head 14. The hole 34 is substantially normal to the slots 22 and 28 and intersects the bore 20, as shown in Figure 2.

A triangular cutting insert 26, formed of tungsten carbide or sintered ceramic cutting material and having faces 36, 38 and cutting edges 40, is received in each of the slots 22, such that the shoulders 30 support one side 42 of each of the inserts 26. The screw 33, when tightened, clamps the inserts 26 in the slots 22 between the jaw elements 31, by drawing the jaw elements 31 together.

A pair of pressed dimples 44, one on each of the jaw elements 31, extend inwardly of the head 14 from the end face 16 to engage and support a second side 46 of each of the inserts 26. The dimples 44 are positioned substantially adjacent the bore 20 on opposite sides of a diameter 48 of the head 14, such that part of each dimple 44 is located above one of the slots 22.

A feature of the invention resides in the method of making the cutter 10 such that the cutting edges 40 of the inserts 26 are positioned on a prescribed diameter. A fixture 50 (see Figures 2, 3 and 4) is utilized for this purpose.

The fixture 50 includes a central bore 52 with a first cylindrical inner surface 54, the diameter of which is greater than that of the head 14 but which is precisely equal to the desired cutting diameter at which the edges 40 of the inserts 26 should be positioned. The bore 52 further comprises a cylindrical support hole 56 which is coaxial with the surface 54 and has a diameter substantially equal to or slightly greater than, that of the shank 12. Because the diameter of the hole 56 is less than that of the bore with the surface 54, a shoulder 58 is formed in the fixture 50.

A method of making a cutter such as is described above comprises the steps of first drilling the cylindrical bore 20 coaxially of the cutter head 14 and substantially coextensive in length therewith and then cutting the slots 22 in opposite halves of the head 14 to a width substantially equal to the thickness of the cutting inserts 26. The slots 22 are cut at an angle of approximately sixty degrees with respect to the lateral surface 24 of the head 14, each of the slots 22 being sloped oppositely to the other, and extending longitudinally inwardly from the end face 16 and substantially radially from surface 24 to bore 20.

The slots 28 are then cut in the head 14, extending the first slots 22 longitudinally of the head 14 and extending radially inwardly from the surface 24 to the bore 20. The slots 28 are of lesser width than the slots 22, whereby supporting shoulders 30 are formed on the sides of the slots 28. As stated hereinabove, the bore 20 and the slots 22 and 28 define jaw elements 31 of the cutter 10.

The cutter 10 is then placed in the fixture 50, the shank 12 being received in the support hole 56 and the head 14 being received within the surface 54 and supported by the shoulder 58. The cutter is thus supported by the fixture. A set screw 60 in the fixture 50 is then tightened to hold the shank 12 securely in position, the screw 60 engaging a flat 62 on the shank 12.

The inserts 26 are then placed in the slots 22 such that the sides 42 thereof slide radially outwardly along the shoulders 30 until the edges 40 of the inserts contact the surface 54. See Figures 2 and 4. The screw 33 is then lightly tightened by means of an allen wrench 63 inserted through a slot 64 in the fixture 50. The cutter 10 is then ready for dimpling.

With the cutter thus disposed in the fixture 50, dimples 44 are then pressed longitudinally inwardly of each jaw element 31 from the end face 16 perpendicular to the sides 46 of each insert on opposite sides of the cutter head diameter 48. The dimpling thus produces a force on each insert which has the effect of driving the insert down the shoulder that supports it, so that the insert moves radially outwardly. Thus the pressing of the dimples 44 forces the cutting edges 40 of the triangular inserts 26 into position abutting the inner surface 54 of the fixture 50, the dimples 44 contacting the second sides 46 of the inserts 26, the diametrical extent of the cutting edges 40 thereby being made precisely equal to the diameter of the cylindrical surface 54 of the fixture 50. If necessary, the clamping screw 33 may be slightly loosened before pressing the dimples 44.

The cutter is then removed from the fixture 50 and the screw 33 is fully tightened, thus holding the inserts 26 tightly in place.

If the cutting edge of the insert 26 is blunted, the insert may be removed from the slots, rotated and replaced with a new cutting edge in the desired position by the procedure described above.

The above described method permits quick and economical manufacture of the cutters, yet results in a tool wherein the cutting edges of the inserts are accurately disposed at the prescribed diameter represented by the surface 54 of the fixture 50. Cooperation between the slots 22, which form the shoulders 30 to support the sides 42 of the inserts 26, and the dimples 44 which abut and support the sides 46 thereof, results in the inserts being properly supported as well as accurately positioned.

It will be appreciated that the present invention provides an end milling cutter comprising: a shank having a generally cylindrical cutter head, the cutter head having an end face substantially normal to the axis thereof; a cylindrical bore extending longitudinally inwardly of the cutter head from the end face, the bore being coaxial with the cutter head and being substantially equal in length to the length of the cutter head; a pair of opposed slots formed in the cutter head, each of the slots extending longitudinally inwardly from the end face and generally radially from the cylindrical bore to the lateral surface of the cutter head, the pair of slots and the bore defining a pair of cooperating jaw elements in the cutter head, each of the jaw elements including a transversely-extending, insert-supporting shoulder on at least one side of the slot, the shoulder extending from the bore to the lateral surface of the cutter head; a cutting insert received in each of the slots, the insert having at least three sides, the shoulder in each slot engaging and supporting one side of the insert received in the slot; a pair of pressed dimples, one on each of the jaw elements, the dimples extending inwardly of the cutter head from the end face thereof, each of the dimples extending inwardly of the slot on the other side thereof, each dimple engaging and supporting a second side of the insert received in the slot; and means to clamp the jaw elements together to retain the inserts within their respective slots.

Preferably the shoulders extend at an angle of about $60^{\circ}$ with respect to the lateral surface of the cutter head, each shoulder being sloped oppositely to the other, and the insert is a triangular insert.

The present invention also provides a method of making an end milling cutter having a pair of cooperating jaw elements defining opposed slots in a cutter head, the head having a pair of cutting inserts having cutting edges on a prescribed diameter, comprising: drilling a cylindrical bore in a cylindrical end milling cutter head, the bore being coaxial with the cutter head and generally co-extensive in length therewith; cutting a pair of generally radially extending first slots in opposite sides of the cutter head, the first slots being of a width substantially equal to the thickness of a cutting insert, the first slots extending longitudinally inwardly from the end face of the cutter and generally radially from the lateral surface of the cutter head to the cylindrical bore; cutting a pair of second slots in the cutter head, the second slots extending the first slots longitudinally of the cutter head, the second slots extending radially inwardly from the lateral surface of the cutter head to the cylindrical bore, the second slots being of a width less than the width of the first slots, whereby each of the first slots form a supporting shoulder on at least one of the sides of the second slots, the bore and the first and second slots defining a pair of cooperating jaw elements in the cutter head; placing a cutting insert in each of the first slots, one side of each of the inersts engaging the respective supporting shoulder; placing the cutter head and the inserts in a fixture, the fixture having a first cylindrical inner surface, the diameter of the first cylindrical inner surface being greater than the diameter of the cutter head and equal to a desired cutting diameter for the cutting edges of the inserts, the one sides of the inserts being supported by the shoulders in their respective slots, the inserts sliding radially outwardly along the shoulders until the inserts contact the first cylindrical inner surface of the fixture; and pressing a dimple longitudinally inwardly of each jaw element from the end face of the cutter head on the other side of each of the pair of second slots until the dimple contacts a second side of each of the inserts, the dimples retaining the cutting edges of the inserts in position abutting the first cylindrical

0205886

inner surface of the fixture, the diameterical extent of the cutting edges of the inserts thereby being made equal to the diameter of the first cylindrical inner surface of the fixture.

The features disclosed in the foregoing description, in the following claims and/or in the accompanying drawings may, both separately and in any combination thereof, be material for realising the invention in diverse forms thereof.

CLAIMS:

1.    An end milling cutter comprising a shank (12) having a cutter head (14), the cutter head (14) having a central longitudinal axis (18) and an end face (16); a pair of opposed slots (22) formed in the cutter head (14), each of the slots (22) extending longitudinally inwardly away from the end face (16) and generally radially from the central longitudinal axis (18) to an external or lateral surface (24) of the cutter head (14), the pair of slots (22) separating a pair of cooperating jaw elements (31) defined by the cutter head (14), each jaw element (31) including a transversely extending shoulder (30) located within a respective one of the slots (22) and extending from the central longitudinal axis (18) to the lateral surface (24) of the cutter head (14); a cutting insert (26) received in each of the slots (22), the insert (26) having at least three sides, the shoulder (30) in each slot (22) engaging and supporting one side of the insert (26) received in the slot (22); a pair of dimples (44), one on each of the jaw elements (31), each dimple (44) engaging a second side of the insert (26) received in the slot (22); and clamping means to retain the inserts (26) within their respective slots (22).

2.    An end milling cutter according to Claim 1, wherein the shoulders (30) are inclined relative to the lateral surface (24) of the cutter head (14) and are each inclined in an opposite direction to the other.

3.    An end milling cutter according to Claim 1 or Claim 2, wherein the dimples (44) are disposed on opposite sides of a diameter (48) of the cutter head (14) and extend inwardly of the cutter head (14) from the end face (16) thereof.

4.    An end milling cutter according to any one of Claims 1 to 3, wherein the inserts (26) are triangular inserts.

5.    A method of making an end milling cutter, said method comprising the steps of cutting a pair of substantially radially extending first slots (22) on opposite sides of a diameter (48) of a cutter head (14), which is mounted on a shank (12), the first slots (22) being of a width substantially equal to the thickness of a cutting insert (26); cutting a pair of second slots (28) in the cutter head (14), the second slots (28) extending the first slots (22) longitudinally of the cutter head (14), the second slots (28) extending radially inwardly from the lateral surface (24) of the cutter head (14) to the central longitudinal axis (18) thereof, and being of a width less than the width of the first slots (22), such that each of the first slots (22) form a shoulder (30); providing means (33) to clamp cutting inserts (26) in the slots (22), placing a cutting insert (26) in each of the first slots (22), one side of each of the inserts (26) engaging with and being supported by the respective shoulder (30) of each slot; placing the cutter head (14) and the inserts (26)in a fixture (50), the fixture (50) having a first cylindrical inner surface (54), the diameter of the first cylindrical inner surface (54) being greater than the diameter of the cutter head (14) and equal to a desired cutting diameter at which the cutting edges (40) of the insert (26) should be positioned; sliding the inserts (26) radially outwardly along the shoulders (30) until the cutting edges (40) of the inserts (26) contact the first cylindrical inner surface (54) of the fixture (50); and pressing a dimple (44) longitudinally inwardly of each jaw element (31) from the end face (16) of the cutter head (14) until the dimple (44) contacts a second side (46) of each of the inserts (26), the dimples (44) retaining the cutting edges (40) of the inserts (26) in position abutting the first cylindrical inner surface (54) of the fixture (50), and clamping the cutting inserts in position with said clamping means (33).

6. A method according to Claim 5, wherein the shoulders (30) are inclined relative to the lateral surface (24) of the cutter head (14) and are each inclined in an opposite direction to the other.

7. A method according to Claim 5 or Claim 6, wherein the dimples (44) are disposed on opposite sides of the diameter (48) of the cutter head (14) and extend inwardly of the cutter head (14) from the end face (16) thereof.

8. A method according to any one of Claims 5 to 7, wherein said step of providing clamping means comprises drilling a radially extending hole (34) through the jaw elements (31) of the cutter head (14), the hole being substantially normal to the first and second slots (22, 28); tapping part of the hole (34) in one jaw element (31), introducing a clamping screw (33) into the hole (34) through the cutter jaw element (31); and said clamping step comprises tightening the clamping screw (33) to draw the jaw elements (31) together to retain the inserts (26) in the first slots (22) when the cutter head (14) and the inserts (26) are in the fixture (50).

9. A method according to any one of Claims 5 to 8, wherein said shank is a substantially cylindrical shank (12) on the cutter head (14), the diameter of the shank (12) being less than the diameter of the cutter head (14), the fixture (50) having a cylindrical support hole (56) coaxial with the first cylindrical surface (54), with the support hole (56) having a diameter substantially equal to or slightly greater than the diameter of the shank (12), but less than the diameter of the first cylindrical inner surface (54), thus forming a shoulder (58) in the fixture (50); the method comprising the step of placing the shank (12) in the support hole (56) to support the shank (12), the cutter head (14) being supported by the shoulder (58) of the fixture (50).

10. A method according to any one of Claims 5 to 9, wherein the inserts (26) are triangular inserts.

FIG. 1

FIG. 3

FIG. 2

FIG. 4

FIG. 5

FIG. 6